# EUROPEAN PATENT SPECIFICATION

(11) **EP 3 731 253 B1**
(45) Date of publication and mention of the grant of the patent: **20.07.2022**
(21) Application number: 18902026.6
(22) Date of filing: 29.01.2018
(51) Int. Cl.: H01H 21/00, G08C 23/04

(54) **OPERATION INPUT DEVICE, REMOTE CONTROL AND REMOTE CONTROL SYSTEM**
OPERATIONSEINGABEVORRICHTUNG, FERNBEDIENUNG UND FERNBEDIENUNGSSYSTEM
DISPOSITIF D'ENTRÉE D'ACTIONNEMENT, TÉLÉCOMMANDE ET SYSTÈME DE TÉLÉCOMMANDE

(43) Date of publication of application: 28.10.2020
(73) Proprietor: Mitsubishi Electric Corporation, Tokyo 100-8310 (JP)
(72) Inventor: YOKOSUKA, Yusuke, Tokyo 100-8310 (JP); MAETANI, Noriaki, Tokyo 100-8310 (JP); FUJIKAWA, Yuko, Tokyo 100-8310 (JP)
(74) Representative: Plasseraud IP
(86) International application number: PCT/JP2018/002726
(87) International publication number: WO 2019/146106

(56) References cited:
- EP-A1- 1 691 263
- JP-A- H09 286 228
- JP-A- 2000 342 841
- JP-A- 2016 095 989

## Description

### TECHNICAL FIELD

The present invention relates to an operation input device that receives an operation for setting an orientation of an operation target, a remote controller including the operation input device, and a remote control system.

### BACKGROUND ART

The wind direction of an air conditioner is typically set using a remote controller. For example, Patent Literature 1 discloses an input device that sets the orientation of an air outlet of an air conditioner. This input device includes a rotary knob, and the orientation of the air outlet of the air conditioner is changed with the rotation of the rotary knob. Examples and possible embodiments of the prior art may be found in documents EP 1 691 263 A2.

### CITATION LIST

### PATENT LITERATURES

Patent Literature 1: JP 2010-244899 A

### SUMMARY OF INVENTION

### TECHNICAL PROBLEM

However, an operator with visual impairment cannot visually check the orientation of the air outlet of the air conditioner, and finds it difficult to recognize the correspondence between a rotational position of the rotary knob and the orientation of the air outlet of the air conditioner. Thus, the input device described in Patent Literature 1 has had a problem that it is difficult for an operator with visual impairment to perceive the set orientation of the air outlet of the air conditioner.

The present invention has been made in order to solve the above problem and an object thereof is to provide an operation input device that allows an operator with visual impairment to easily recognize the orientation of an operation target, a remote controller including the operation input device, and a remote control system.

### SOLUTION TO PROBLEM

An operation input device according to the present invention comprises an operation unit including an operation plate for receiving an operation of an operator and a support unit for supporting the operation plate in such a way as to allow the operation plate to be tilted; a detection unit for detecting an operation of tilting the operation plate; an identification unit for identifying a tilt position of the operation plate for which tilting operation has been detected; and a setting unit for setting an orientation of an operation target included in a target apparatus to an orientation corresponding to the tilt position of the operation plate identified by the identification unit, whereby when the operation plate is tilted at a tilted position selected by the operator from among a plurality of tilted positions, the identification unit identifies the tilted position selected by the operator and the operation unit holds the operation plate in the tilted position selected by the operator.

### ADVANTAGEOUS EFFECTS OF INVENTION

According to the present invention, the operation plate is supported by the support unit in such a way it can be tilted, and the orientation of the operation target included in the target apparatus is set to the orientation corresponding to the tilt position of the operation plate, whereby an operator with visual impairment can easily recognize the orientation of the operation target.

### BRIEF DESCRIPTION OF DRAWINGS

FIG. 1 is a block diagram illustrating a configuration of a remote controller system according to a first embodiment of the present invention.
FIG. 2 is an exploded perspective view illustrating a structure of an operation unit according to the first embodiment.
FIG. 3 is a diagram illustrating a general idea of an operation of the operation unit according to the first embodiment.
FIG. 4A is a block diagram illustrating a configuration of hardware that implements functions of an operation input device according to the first embodiment. FIG. 4B is a block diagram illustrating a configuration of hardware that executes software for implementing the functions of the operation input device according to the first embodiment.
FIG. 5 is a flowchart illustrating an operation of the operation input device according to the first embodiment.
FIG. 6A is a diagram illustrating a first tilt position of an operation plate according to the first embodiment. FIG. 6B is a diagram illustrating a second tilt position of the operation plate according to the first embodiment. FIG. 6C is a diagram illustrating a third tilt position of the operation plate according to the first embodiment.
FIG. 7 is a perspective view illustrating another mode of the operation unit according to the first embodiment.
FIG. 8 is a perspective view illustrating an operation panel included in a remote controller according to the first embodiment.

### DESCRIPTION OF EMBODIMENTS

An embodiment for carrying out the present invention will now be described with reference to the drawings in order to describe the present invention in more detail.

### First Embodiment

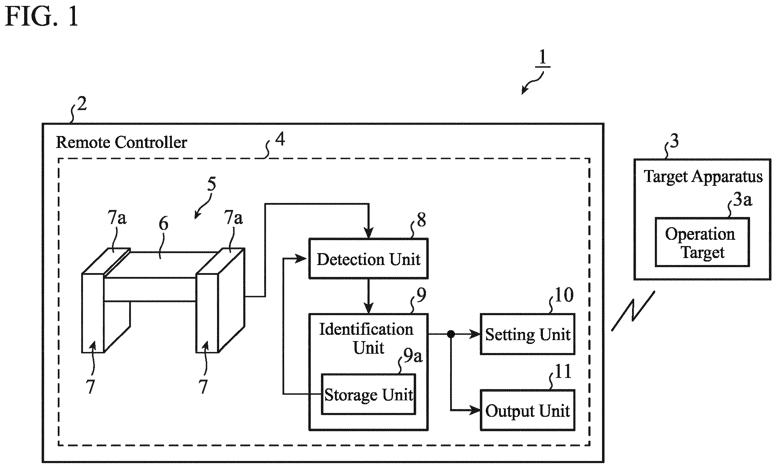

FIG. 1 is a block diagram illustrating a configuration of a remote control system 1 according to a first embodiment of the present invention. The remote control system 1 includes a remote controller 2 and a target apparatus 3, and the orientation of an operation target 3a included in the target apparatus 3 is controlled by the remote controller 2. The remote controller 2 includes an operation input device 4. The operation input device 4 includes an operation unit 5, and the operation unit 5 includes an operation plate 6 and a support unit 7 that supports the operation plate. The operation input device 4 includes a detection unit 8, an identification unit 9, a setting unit 10, and an output unit 11 in addition to the operation unit 5.

The target apparatus 3 includes the operation target 3a whose orientation is set by the operation input device 4, and, for example, the target apparatus 3 is an air conditioner, and the operation target 3a is a louver provided at an air outlet of the air conditioner. Note that the target apparatus 3 is not limited to the air conditioner. When the target apparatus 3 is a television device whose monitor orientation is variable, the operation target 3a is a monitor. Hereinafter, there will be described an example in which the target apparatus 3 is the air conditioner, and the operation target 3a is the louver provided at the air outlet of the air conditioner.

The operation input device 4 includes the operation unit 5, the detection unit 8, the identification unit 9, the setting unit 10, and the output unit 11. The operation plate 6 included in the operation unit 5 is a member that receives an operation of an operator, and is, for example, a rectangular member. The support unit 7 is a member that supports the operation plate 6 in such a way that it can be tilted, and includes two members arranged to face each other as illustrated in FIG. 1. The operation plate 6 is provided while sandwiched between the two members forming the support unit 7. The support unit 7 includes, on an outer surface thereof, a portion 7a parallel to a reference plane and supports the operation plate 6 in such a way that it can be tilted with respect to the reference plane.

The reference plane is a horizontal plane in FIG. 1, and the support unit 7 supports the operation plate 6 in such a way that it can be tilted to each of a first tilt position parallel to the horizontal plane, a second tilt position that is at 45 degrees with respect to the horizontal plane, and a third tilt position that is at an angle larger than that of the second tilt position with respect to the horizontal plane. An operator can recognize how much the operation plate 6 is tilted with respect to the reference plane by touching the portion 7a parallel to the reference plane. Therefore, even an operator with visual impairment can perceive the tilt position of the operation plate 6 by touch.

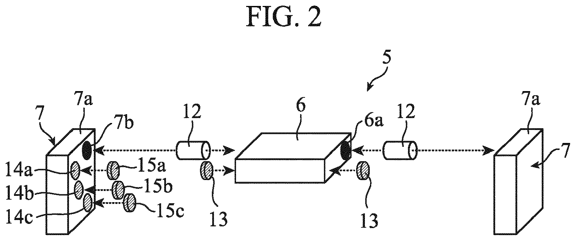

The detection unit 8 detects an operation of tilting the operation plate 6. For example, the detection unit 8 detects the operation of tilting the operation plate 6 on the basis of an output value of a sensor described later with reference to FIG. 2. When detecting the operation of tilting the operation plate 6, the detection unit 8 outputs output information of the sensor to the identification unit 9.

The identification unit 9 identifies the tilt position of the operation plate 6 whose tilt has been detected by the detection unit 8.

For example, the identification unit 9 identifies the tilt position of the operation plate 6 on the basis of the output information of the sensor input from the detection unit 8. Information indicating the tilt position of the operation plate 6 is output to the setting unit 10 and the output unit 11, and also stored in a storage unit 9a.

The setting unit 10 sets the orientation of the operation target 3a of the target apparatus 3 to the orientation corresponding to the tilt position of the operation plate 6 identified by the identification unit 9. For example, the setting unit 10 generates designation information for designating the orientation corresponding to the tilt position of the operation plate 6, and transmits the designation information to the air conditioner via infrared communication. The air conditioner having received the designation information from the operation input device 4 sets the orientation of the louver provided at the air outlet to the orientation designated by the designation information.

The output unit 11 outputs the orientation of the operation target 3a audibly or visually to the operator. For example, the output unit 11 outputs, as the orientation of the operation target 3a, the orientation corresponding to the tilt position of the operation plate 6 identified by the identification unit 9.

FIG. 2 is an exploded perspective view illustrating a structure of the operation unit 5. As illustrated in FIG. 2, fitting holes 6a are provided coaxially on both side faces of the operation plate 6, and as indicated by a dashed arrow, one end of a shaft portion 12 is fitted to each of the fitting holes 6a on the both side faces of the operation plate 6.

The two members forming the support unit 7 are each provided with a shaft hole 7b, and as indicated by a dashed arrow, another end of the shaft portion 12 is inserted into the shaft hole 7b of each of the two members. As a result, the operation plate 6 is turned about the shaft portions 12.

In addition to the fitting holes 6a, magnets 13 are provided on the both side faces of the operation plate 6. On one of the two members forming the support unit 7, a magnet 14a, a magnet 14b, and a magnet 14c are provided along the path of the magnet 13 when the operation plate 6 is turned. In the example of FIG. 2, on the support unit 7, the magnet 14a is provided at a first position corresponding to the first tilt position parallel to the horizontal plane, and the magnet 14b is provided at a second position corresponding to the second tilt position where the operation plate 6 is tilted at 45 degrees with respect to the horizontal plane. Moreover, the magnet 14c is provided at a third position corresponding to the third tilt position that is at the angle larger than that of the second tilt position.

A sensor 15a is provided on the magnet 14a, a sensor 15b is provided on the magnet 14b, and a sensor 15c is provided on the magnet 14c. The sensors 15a to 15c are each a sensor for detecting that the magnet 13 provided on the operation plate 6 is at a position facing the sensor, and a pressure sensor is used as the sensor, for example. An output value of the pressure sensor changes when the magnet 13 is at the position facing the sensor, and the output value that has changed is output to the detection unit 8. The detection unit 8 detects an operation of tilting the operation plate 6 on the basis of the output value of the pressure sensor. The identification unit 9 identifies the tilt position of the operation plate 6 on the basis of the output value of the pressure sensor input from the detection unit 8.

Note that although FIG. 2 illustrates the structure in which the magnets 14a to 14c and the sensors 15a to 15c are provided at the first to third positions, it is not limited thereto.

For example, when the orientation of the operation target 3a can be controlled among equal to or more than four orientations, the operation plate 6 is supported by the support unit 7 in such a way that it can be tilted to equal to or more than four tilt positions, and on the support unit 7, a magnet and a pressure sensor are provided at a position corresponding to each of equal to or more than four tilt positions.

Although the case where the support unit 7 includes the two members has been described, the support unit 7 may have a structure in which these are integrated. The operation unit 5 may detect the position of the operation plate 6 using a rotary encoder without using the magnets and the sensors. That is, the implementation of the operation unit 5 may be done in such a way that the operator can check the tilt position of the operation plate 6 by touch.

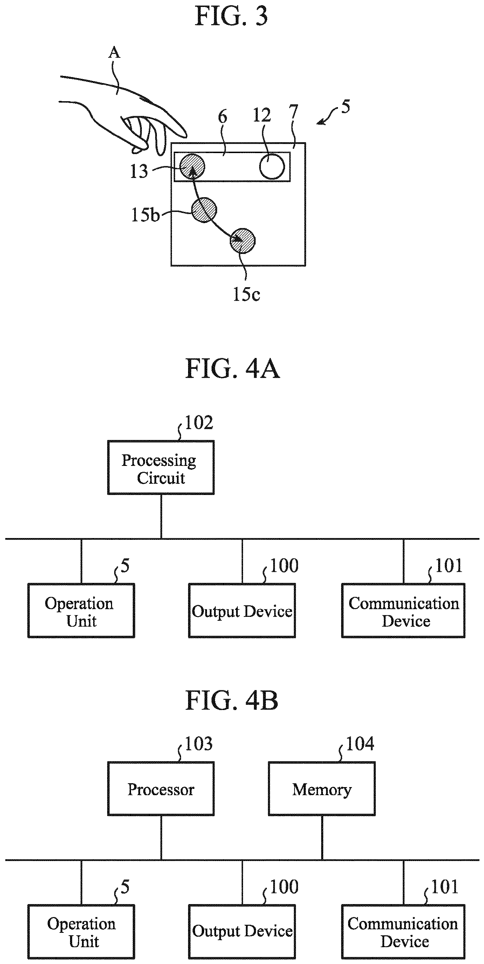

FIG. 3 is a diagram illustrating a general idea of the operation of the operation unit 5. The operator uses a hand "A" to hold and turn the operation plate 6 in the direction of an arrow, so that the tilt position of the operation plate 6 is changed. The operation plate 6 need only be of a size that allows the operator to hold it with the hand **"A".**

Note that although the structure in which the operation plate 6 is turned in an up-down direction is illustrated, it is not limited thereto. For example, in a case of a structure in which the orientation of the operation target 3a of the target apparatus 3 is changed in a left-right direction, the operation input device 4 may have a structure in which the operation plate 6 is turned in the left-right direction. That is, in the operation input device 4, the operation plate 6 need only be operable in the same direction as the operation target 3a.

FIG. 4A is a block diagram illustrating a configuration of hardware that implements the functions of the operation input device 4. FIG. 4B is a block diagram illustrating a configuration of hardware that executes software for implementing the functions of the operation input device 4. In FIGS. 4A and 4B, the operation unit 5 is the operation unit illustrated in FIG. 1. An output device 100 is the output unit 11 illustrated in FIG. 1, and is implemented by a speaker that outputs the orientation of the operation target 3a by sound, a display device that displays the orientation of the operation target 3a, or a combination thereof.

A communication device 101 is a communication device that transmits the above designation information to the air conditioner, and is implemented by a communication device using an infrared light emitting diode, for example. The storage unit 9a illustrated in FIG. 1 is implemented by a memory (not shown) included in a processing circuit 102 in FIG. 4A or a memory 104 in FIG. 4B.

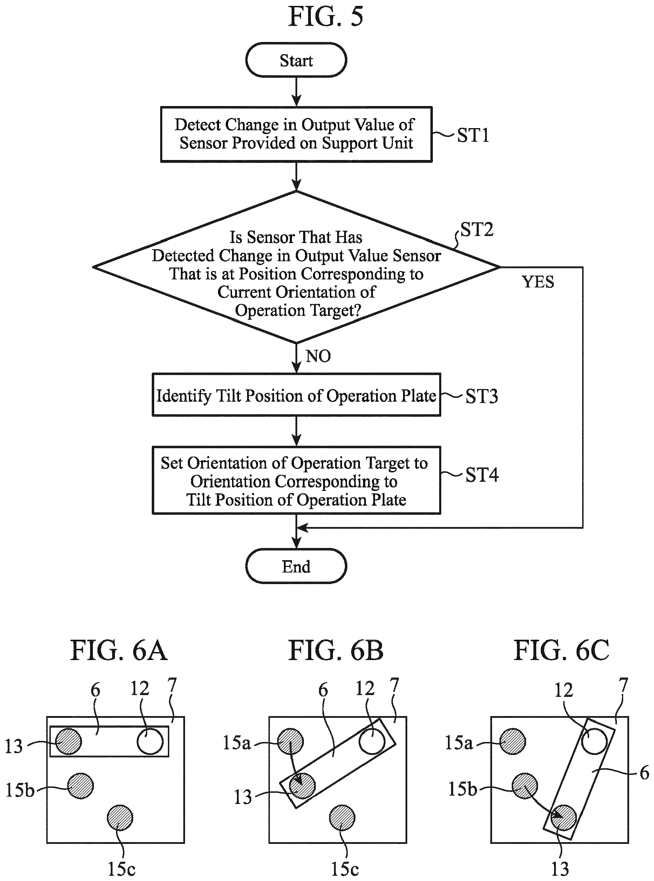

The function of each of the detection unit 8, the identification unit 9 (excluding the storage unit 9a), and the setting unit 10 in the operation input device 4 is implemented by a processing circuit. That is, the operation input device 4 includes a processing circuit for executing the processing from step ST1 to step ST4 described later with reference to FIG. 5. The processing circuit may be dedicated hardware, or may be a central processing unit (CPU) that executes programs stored in a memory.

When the above processing circuit is the processing circuit 102 as the dedicated hardware illustrated in FIG. 4A, the processing circuit 102 corresponds to a single circuit, a composite circuit, a programmed processor, a parallel-programmed processor, an application specific integrated circuit (ASIC), a field-programmable gate array (FPGA), or combinations thereof, for example.

The functions of the detection unit 8, the identification unit 9, and the setting unit 10 may be implemented by separate processing circuits, or may be implemented collectively by one processing circuit.

When the processing circuit is a processor 103 illustrated in FIG. 4B, the function of each of the detection unit 8, the identification unit 9, and the setting unit 10 is implemented by software, firmware, or a combination of software and firmware. The software or firmware is described as programs and stored in the memory 104.

The processor 103 reads and executes the programs stored in the memory 104, thereby implementing the function of each of the detection unit 8, the identification unit 9, and the setting unit 10.

That is, the operation input device 4 includes the memory 104 for storing the programs that, when executed by the processor 103, result in the execution of the processing in steps ST1 to ST4 described later with reference to FIG. 5. These programs cause a computer to execute the procedures or methods performed in the detection unit 8, the identification unit 9, and the setting unit 10. The memory 104 may be a computer-readable storage medium that stores programs for causing a computer to function as the detection unit 8, the identification unit 9, and the setting unit 10.

The memory 104 corresponds to a non-volatile or volatile semiconductor memory such as a random access memory (RAM), a read only memory (ROM), a flash memory, an erasable programmable read only memory (EPROM), or an electrically-EPROM (EEPROM), a magnetic disk, a flexible disk, an optical disc, a compact disc, a mini disc, a DVD, or the like. The memory 104 may also be an external memory such as a universal serial bus (USB) memory.

The functions of the detection unit 8, the identification unit 9, and the setting unit 10 may be implemented partly by dedicated hardware and partly by software or firmware. For example, the function of the detection unit 8 is implemented by the processing circuit that is dedicated hardware. The functions of the identification unit 9 and the setting unit 10 may be implemented by the processor 103 reading and executing the programs stored in the memory 104. As described above, the processing circuit can implement each of the above functions by hardware, software, firmware, or combinations thereof.

Next, the operation will be described.

FIG. 5 is a flowchart illustrating the operation of the operation input device 4.

The operation plate 6 is turned by the operator to change the tilt position thereof. The detection unit 8 detects a change in the output value of the sensor, which is at a position corresponding to the position to which the operation plate 6 is turned, among the sensors 15a to 15c provided on the support unit 7 (step ST1).

FIG. 6A is a diagram illustrating the first tilt position of the operation plate 6. FIG. 6B is a diagram illustrating the second tilt position of the operation plate 6. FIG. 6C is a diagram illustrating the third tilt position of the operation plate 6. When the magnet 13 of the operation plate 6 is at the first tilt position as illustrated in FIG. 6A, the sensor 15a outputs a first output value to the detection unit 8. When the magnet 13 of the operation plate 6 is at the second tilt position the second position as illustrated in FIG. 6B, the sensor 15b outputs a second output value to the detection unit 8. When the operation plate 6 is at the third position corresponding to the orientation of the angle larger than that of the second position as illustrated in FIG. 6C, the sensor 15c outputs a third output value to the detection unit 8.

Note that the sensors 15a to 15c are sensors outputting the first output value, the second output value, and the third output value that are different from one another.

The tilt position of the operation plate 6 is not settled until the magnet 13 provided on the operation plate 6 moves to the position facing any of the sensors 15a to 15c. That is, among the sensors 15a to 15c, the sensor whose output value has been equal to or larger than a threshold due to the movement of the magnet 13 to the position facing the sensor is determined to have had a change in the output value.

The detection unit 8 determines whether or not the sensor for which the change in the output value has been detected is a sensor at the position corresponding to the current orientation of the operation target 3a (step ST2).

For example, the detection unit 8 compares the output value of the sensor for which the change in the output value has been detected with the output value of the sensor at the position corresponding to the tilt position of the operation plate 6 that is stored in the storage unit 9a. If the two output values match, the detection unit 8 determines that the sensor for which the change in the output value has been detected is the sensor at the position corresponding to the current orientation of the operation target 3a.

If the sensor for which the change in the output value has been detected is the sensor at the position corresponding to the current orientation of the operation target 3a (YES in step ST2), it is considered that the tilt position of the operation plate 6 has not been changed from that corresponding to the current orientation of the operation target 3a. Therefore, the series of processing in FIG. 5 is ended.

If the sensor for which the change in the output value has been detected is not the sensor at the position corresponding to the current orientation of the operation target 3a (NO in step ST2), the detection unit 8 determines that an operation to change the tilt position of the operation plate 6 has been performed. At this time, the detection unit 8 outputs, to the identification unit 9, the output value of the sensor for which the change in the output value has been detected.

The identification unit 9 identifies the tilt position of the operation plate 6 on the basis of the output value of the sensor input from the detection unit 8 (step ST3). For example, when having received the first output value from the detection unit 8, the identification unit 9 identifies that the operation plate 6 is at the first tilt position. The identification unit 9 identifies that the operation plate 6 is at the second tilt position when having received the second output value from the detection unit 8, or identifies that the operation plate 6 is at the third tilt position when having received the third output value from the detection unit 8. The identification unit 9 stores the output value of the sensor indicating the tilt position of the operation plate 6 identified in the storage unit 9a, and outputs the output value to the setting unit 10 and the output unit 11.

The setting unit 10 sets the orientation of the operation target 3a to the orientation corresponding to the tilt position of the operation plate 6 identified by the identification unit 9 (step ST4). For example, the setting unit 10 generates designation information for designating the orientation corresponding to the tilt position of the operation plate 6 on the basis of the output value of the sensor indicating the tilt position of the operation plate 6, and converts the generated designation information into a format for infrared communication. The communication device 101 transmits the designation information input from the setting unit 10 to the target apparatus 3. The target apparatus 3 sets the orientation of the operation target 3a to the orientation corresponding to the tilt position of the operation plate 6 on the basis of the designation information received from the operation input device 4.

The output unit 11 outputs the orientation of the operation target 3a audibly or visually to the operator on the basis of the output value of the sensor indicating the tilt position of the operation plate 6 input from the identification unit 9. For example, when the output unit 11 is a speaker, the speaker outputs the orientation of the operation target 3a by sound. When the output unit 11 is a display device, the display device displays the orientation of the operation target 3a. The operator can check the orientation of the operation target 3a on the basis of the information output from the output unit 11.

Note that in order for the operation plate to be perceived more easily by touch, the operation plate may be formed to give a different tactile sensation from a portion of the operation unit other than the operation plate.

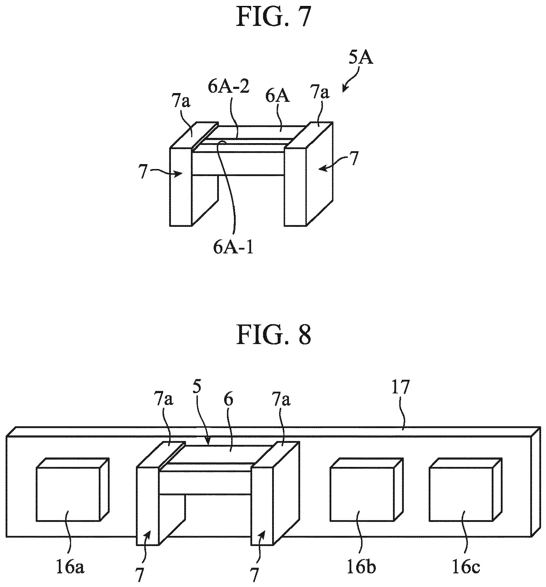

FIG. 7 is a perspective view illustrating an operation unit 5A of the first embodiment, and illustrates an operation plate 6A giving a different tactile sensation from a portion of the operation unit 5A other than the operation plate 6A. As illustrated in FIG. 7, the operation plate 6A is provided with a slit 6A-1 and a slit 6A-2. No slit is provided in the portion of the operation unit 5A other than the operation plate 6A. The operation unit 5A has the same structure as the operation unit 5 illustrated in FIGS. 1 and 2 except that the operation plate has the slits.

The slit 6A-1 and the slit 6A-2 give a tactile sensation that the surface is recessed to the operator touching the operation plate 6A. Therefore, the slit 6A-1 and the slit 6A-2 allow the operator to perceive the operation plate 6A by touch.

Note that although the structure in which the two slits are provided in the operation plate is illustrated, equal to or more than three slits or only one slit may be provided as long as a difference in tactile sensation from the portion other than the operation plate can be achieved.

Alternatively, the operation plate 6A and the portion of the operation unit 5A other than the operation plate 6A may be made of materials giving different tactile sensations. For example, when the operation plate 6A is made of metal and the portion other than the operation plate 6A is made of wood, the operator can perceive the operation plate 6A by the metallic tactile sensation.

Moreover, assuming an operator with weak sight, the operation plate 6A and the portion of the operation unit 5A other than the operation plate 6A may have different colors.

The remote controller 2 may also include an operation panel provided with the operation unit 5 (or the operation unit 5A) and a plurality of operation members.

FIG. 8 is a perspective view illustrating an operation panel 17 included in the remote controller 2 according to the first embodiment. In FIG. 8, the operation panel 17 has a structure in which an operation member 16a, the operation unit 5, an operation member 16b, and an operation member 16c are arranged on one surface of a plate-shaped member.

The operation unit 5 has a function of controlling the orientation of the louver provided at the air outlet of the air conditioner. For example, the operation member 16a functions as a switch for turning on and off the power supply of the air conditioner, the operation member 16b functions as a switch for switching the air conditioner to cooling, and the operation member 16c functions as a switch for switching the air conditioner to heating. Thus, the operation unit 5 and the operation members 16a to 16c are assigned the functions different from one another.

The operation panel 17 is mounted on, for example, a mounting surface (such as a wall). Moreover, each of the operation unit 5 and the operation members 16a to 16c may be of a size that allows an operator to hold it in both hands. By recognizing in advance what function is assigned to the operation member at which position on the operation panel 17, the operator can perceive by touch the operation member corresponding to the function to be controlled.

For example, an operator with visual impairment can perceive the operation member corresponding to the function to be controlled by touching the operation members provided on the operation panel 17 one by one.

Note that although FIG. 8 illustrates the case where the operation unit 5 is provided on the operation panel 17, the operation panel 17 may be provided with the operation unit 5A or may be provided with both the operation unit 5 and the operation unit 5A.

As described above, in the operation input device 4 according to the first embodiment, the operation plate 6 is supported by the support unit 7 in such a way that it can be tilted, and the orientation of the operation target 3a of the target apparatus 3 is set to the orientation corresponding to the tilt position of the operation plate 6. Thus, an operator with visual impairment can easily recognize the orientation of the operation target.

In the operation input device 4 according to the first embodiment, the operation plate 6A gives a different tactile sensation from the portion of the operation unit 5A other than the operation plate 6A. This allows an operator to perceive the operation plate 6A by touch.

The operation input device 4 according to the first embodiment includes the output unit 11 that outputs the orientation of the operation target 3a audibly or visually to an operator. This allows the operator to audibly or visually check the orientation of the operation target 3a.

In the operation input device 4 according to the first embodiment, the support unit 7 includes, on the outer surface thereof, the portion 7a parallel to the reference plane and supports the operation plate 6 in such a way that it can be tilted with respect to the reference plane. This allows an operator to recognize how much the operation plate 6 is tilted with respect to the reference plane by touching the portion 7a parallel to the reference plane.

The remote controller 2 according to the first embodiment includes the operation panel 17 provided with the operation unit 5 (or the operation unit 5A) and the operation members 16a to 16c. The operation unit 5 (or 5A) and the operation members 16a to 16c are assigned the functions different from one another in the target apparatus 3. With this structure, the operation member corresponding to the function to be controlled can be recognized by touch.

Note that the present invention is not limited to the above embodiment but can modify any component in the first embodiment, or omit any component in the first embodiment within the scope of the present invention.

### INDUSTRIAL APPLICABILITY

The operation input device according to the present invention allows an operator to recognize the orientation of the operation target by touch, and is thus suitable for an operation input device of an operation target, such as an air outlet of an air conditioner, whose orientation is usually not controlled by an operator directly touching the operation target.

### REFERENCE SIGNS LIST

- **1:**: Remote control system,
- **2:**: Remote controller,
- **3:**: Target apparatus,
- **3a:**: Operation target,
- **4:**: Operation input device,
- **5** and **5A:**: Operation unit,
- **6** and **6A:**: Operation plate,
- **6A-1** and **6A-2:**: Slit,
- **6a:**: Fitting hole,
- **7:**: Support unit,
- **7a:**: Portion,
- **7b:**: Shaft hole,
- **8:**: Detection unit,
- **9:**: Identification unit,
- **9a:**: Storage unit,
- **10:**: Setting unit,
- **11:**: Output unit,
- **12:**: Shaft portion,
- **13** and **14a** to **14c:**: Magnet,
- **15a** to **15c:**: Sensor,
- **16a** to **16c:**: Operation member,
- **17:**: Operation panel,
- **100:**: Output device,
- **101:**: Communication device,
- **102:**: Processing circuit,
- **103:**: Processor,
- **104:**: Memory.

## Claims

1. An operation input device (4) comprising:
an operation unit (5) including an operation plate (6) for receiving an operation of an operator and a support unit (7) for supporting the operation plate (6) in such a way as to allow the operation plate (6) to be tilted;
a detection unit (8) for detecting an operation of tilting the operation plate (6);
an identification unit (9) for identifying a tilt position of the operation plate (6) for which tilting operation has been detected; and
a setting unit (10) for setting an orientation of an operation target (3a) included in a target apparatus (3) to an orientation corresponding to the tilt position of the operation plate (6) identified by the identification unit (9),
whereby
when the operation plate is tilted at a tilted position selected by the operator from among a plurality of tilted positions, the identification unit identifies the tilted position selected by the operator, **characterized in that**
the operation unit (5) holds the operation plate in the tilted position selected by the operator.

2. The operation input device (4) according to claim 1, wherein
the operation plate (6) gives a different tactile sensation from a portion of the operation unit (5) other than the operation plate (6).

3. The operation input device (4) according to claim 1, comprising
an output unit (11) for outputting the orientation of the operation target (3a) audibly or visually to the operator.

4. The operation input device (4) according to claim 1, wherein
the support unit (7) includes, on an outer surface, a portion parallel to a reference plane, and
supports the operation plate (6) in such a way as to allow the operation plate (6) to be tilted with respect to the reference plane.

5. A remote controller (2) comprising the operation input device (4) according to any one of claims 1 to 4.

6. The remote controller (2) according to claim 5, comprising
an operation panel (17) provided with the operation unit (5) and a plurality of operation members (16a, 16b, 16c), wherein
the operation unit (5) and the plurality of operation members (16a, 16b, 16c) are each assigned a different function of the target apparatus (3).

7. A remote control system (1) comprising:
the remote controller (2) according to claim 6; and
the target apparatus (3) including the operation target (3a) whose orientation is controlled by the remote controller (2).

## Patentansprüche

1. Bedienungseingabevorrichtung (4), umfassend:
eine Bedienungseinheit (5), welche eine Bedienungsplatte (6) zum Empfangen einer Bedienung eines Bedieners und eine Halterungseinheit (7) umfasst, um die Bedienungsplatte (6) in einer derartigen Weise zu haltern, dass der Bedienungsplatte (6) erlaubt ist, geneigt zu werden;
eine Detektionseinheit (8) zum Detektieren einer Bedienung eines Neigens der Bedienungsplatte (6);
eine Identifikationseinheit (9) zum Identifizieren einer Neigungsposition der Bedienungsplatte (6), für welche eine Neigungsbedienung detektiert worden ist; und
eine Einstelleinheit (10) zum Einstellen einer Ausrichtung eines Bedienungsziels (3a), welches in einer Zielvorrichtung (3) umfasst ist, zu einer Ausrichtung, welche der Neigungsposition der Bedienungsplatte (6) entspricht, welche durch die Identifikationseinheit (9) identifiziert worden ist,
wobei, wenn die Bedienungsplatte in einer geneigten Position geneigt ist, welche durch den Bediener unter einer Mehrzahl geneigter Positionen ausgewählt ist, die Identifikationseinheit die geneigte Position identifiziert, welche durch den Bediener ausgewählt worden ist,
**dadurch gekennzeichnet, dass** die Bedienungseinheit (5) die Bedienungsplatte in der geneigten Position hält, welche durch den Bediener ausgewählt worden ist.

2. Bedienungseingabevorrichtung (4) nach Anspruch 1, wobei die Bedienungsplatte (6) ein unterschiedliches Tastgefühl von einem Abschnitt der Bedienungseinheit (5) abgibt, welcher sich von der Bedienungsplatte (6) unterscheidet.

3. Bedienungseingabevorrichtung (4) nach Anspruch 1, umfassend eine Ausgabeeinheit (11) zum Ausgeben der Ausrichtung des Bedienungsziels (3a) akustisch oder visuell an den Bediener.

4. Bedienungseingabevorrichtung (4) nach Anspruch 1, wobei die Halterungseinheit (7) an einer äußeren Fläche einen Abschnitt umfasst, welcher parallel zu einer Referenzebene ist, und
die Bedienungsplatte (6) in einer derartigen Weise haltert, dass der Bedienungsplatte (6) erlaubt ist, in Bezug auf die Referenzebene geneigt zu werden.

5. Fernsteuerungseinheit (2), umfassend die Bedienungseingabevorrichtung (4) nach einem der Ansprüche 1 bis 4.

6. Fernsteuerungseinheit (2) nach Anspruch 5, umfassend
ein Bedienungspanel (17), welches mit der Bedienungseinheit (5) und einer Mehrzahl von Bedienungselementen (16a, 16b, 16c) bereitgestellt ist, wobei
die Bedienungseinheit (5) und die Mehrzahl von Bedienungselementen (16a, 16b, 16c) jeweils einer verschiedenen Funktion der Zielvorrichtung (3) zugewiesen sind.

7. Fernsteuerungssystem (1), umfassend:
die Fernsteuerungseinheit (2) nach Anspruch 6; und
die Zielvorrichtung (3), umfassend das Bedienungsziel (3a), dessen Ausrichtung durch die Fernsteuerungseinheit (2) gesteuert wird.

## Revendications

1. Dispositif d'entrée d'actionnement (4) comprenant :
une unité d'actionnement (5) incluant une plaque d'actionnement (6) pour recevoir un actionnement d'une personne en charge de l'actionnement et une unité de support (7) pour supporter la plaque d'actionnement (6) de manière à permettre à la plaque d'actionnement (6) d'être inclinée ;
une unité de détection (8) pour détecter un actionnement d'inclinaison de la plaque d'actionnement (6) ;
une unité d'identification (9) pour identifier une position d'inclinaison de la plaque d'actionnement (6) pour laquelle un actionnement d'inclinaison a été détecté ; et
une unité de réglage (10) pour régler une orientation d'une cible d'actionnement (3a) incluse dans un appareil cible (3) dans une orientation correspondant à la position d'inclinaison de la plaque d'actionnement (6) identifiée par l'unité d'identification (9),
moyennant quoi
lorsque la plaque d'actionnement est inclinée au niveau d'une position inclinée sélectionnée par la personne en charge de l'actionnement parmi une pluralité de positions inclinées, l'unité d'identification identifie la position inclinée sélectionnée par la personne en charge de l'actionnement, **caractérisé en ce que** l'unité d'actionnement (5) maintient la plaque d'actionnement dans la position inclinée sélectionnée par la personne en charge de l'actionnement.

2. Dispositif d'entrée d'actionnement (4) selon la revendication 1, dans lequel
la plaque d'actionnement (6) donne une sensation tactile différente d'une partie de l'unité d'actionnement (5) autre que la plaque d'actionnement (6).

3. Dispositif d'entrée d'actionnement (4) selon la revendication 1, comprenant
une unité de sortie (11) pour délivrer en sortie l'orientation de la cible d'actionnement (3a) de manière audible ou de manière visuelle à la personne en charge de l'actionnement.

4. Dispositif d'entrée d'actionnement (4) selon la revendication 1, dans lequel
l'unité de support (7) inclut, sur une surface externe, une partie parallèle à un plan de référence, et
supporte la plaque d'actionnement (6) de manière à permettre à la plaque d'actionnement (6) d'être inclinée par rapport au plan de référence.

5. Dispositif de commande à distance (2) comprenant le dispositif d'entrée d'actionnement (4) selon l'une quelconque des revendications 1 à 4.

6. Dispositif de commande à distance (2) selon la revendication 5, comprenant
un panneau d'actionnement (17) doté de l'unité d'actionnement (5) et d'une pluralité d'éléments d'actionnement (16a, 16b, 16c), dans lequel
l'unité d'actionnement (5) et la pluralité d'éléments d'actionnement (16a, 16b, 16c) sont chacun attribués à une fonction différente de l'appareil cible (3).

7. Système de commande à distance (1) comprenant :
le dispositif de commande à distance (2) selon la revendication 6 ; et
l'appareil cible (3) incluant la cible d'actionnement (3a) dont l'orientation est commandée par le dispositif de commande à distance (2).
